# EUROPEAN PATENT APPLICATION

(11) **EP 3 644 167 A1**
(43) Date of publication of application: **29.04.2020**
(21) Application number: 18202363.0
(22) Date of filing: 24.10.2018
(51) Int. Cl.: G06F 3/041, G06F 3/042

(54) **ELECTRONIC DEVICES AND METHODS OF OPERATING ELECTRONIC DEVICES**

(71) Applicant: Vestel Elektronik Sanayi ve Ticaret A.S., 45030 Manisa (TR)
(72) Inventor: YILMAZ, Evren Gökhan, 45030 Manisa (TR); ÖZTEKIN, Güner, 45030 Manisa (TR)
(74) Representative: Flint, Adam

(57) **Abstract**

An electronic device (100) comprises a touch input surface (200), a touch sensor arrangement, an object sensor (400), and a processor (101). The touch sensor arrangement detects a touch input on the touch input surface (200). The object sensor (400) obtains an indication of the location of an object (300) on the touch input surface (200) when a said object (300) is touching the touch input surface (200). The processor (101) is configured to discard any touch inputs to the touch input surface (200) that do not correspond to the location of an object (300) touching the touch input surface (200).

## Description

### Technical Field

The present disclosure relates to electronic devices and methods of operating electronic devices.

### Background

Various computer input devices are known that allow users to physically input control commands to a computer via touch. Typically, these take the form of a flat surface provided with a sensor arrangement for determining when and where a user has touched the surface, whether directly with a finger or the like or via some stylus or the like. Examples of suitable sensor technologies include resistive sensing, capacitive sensing, etc.

### Summary

According to a first aspect disclosed herein, there is provided an electronic device comprising: a touch input surface; a touch sensor arrangement for detecting a touch input on the touch input surface; an object sensor for obtaining an indication of the location of an object on the touch input surface when a said object is touching the touch input surface; and a processor configured to discard any touch inputs to the touch input surface that do not correspond to the location of an object touching the touch input surface.

The object sensor can obtain some indication of the location of an object on the touch input surface when the object is actually touching the touch input surface. Correspondingly, the object sensor can effectively be used to obtain an indication that no object is actually touching the touch input surface. Either way, any touch inputs to the touch input surface that do not correspond to the location of an object touching the touch input surface can be discarded, on the basis that these are false or spurious inputs and not real or actual inputs.

In an example, the object sensor is arranged to detect when a said object is touching at least one sub-region of the touch input surface; and the processor is configured to discard any touch inputs to the touch input surface that do not lie in the detected sub-region.

In an example, the object sensor is arranged to detect at least a distance from the object sensor to a said object touching the touch input surface; and the processor is configured to discard any touch inputs to the touch input surface that do not lie the detected distance away from the object sensor.

In an example, the object sensor is configured to operate in response to the touch sensor detecting a plurality of simultaneous touch inputs.

In an example, the object sensor is positioned at a corner of the touch input surface.

In an example, the electronic device comprises a first object sensor and a second object sensor located at different positions relative to the touch input surface.

In an example, the electronic device is arranged such that the first object sensor and the second object sensor are activated at different times.

In an example, the or each object sensor is a light sensor.

In an example, the first object sensor comprises a first light sensor arranged to emit and detect light having a first wavelength and the second object sensor comprises a second light sensor arranged to emit and detect light having a second wavelength different from the first wavelength.

In an example, the touch sensor is a capacitive sensor.

In an example, touch input surface is a touchscreen.

According to a second aspect disclosed herein, there is provided a method of operating an electronic device, the method comprising: detecting a touch input on a touch input surface of the electronic device; obtaining an indication of the location of an object on the touch input surface when an object is touching the touch input surface; and discarding any touch inputs to the touch input surface that do not correspond to the location of an object touching the touch input surface.

In an example, obtaining the indication of the location of an object on the touch input surface comprises detecting when an object is touching at least one sub-region of the touch input surface, and discarding any touch inputs to the touch input surface comprises discarding any touch inputs to the touch input surface that do not lie in the detected sub-region.

In an example, obtaining the indication of the location of an object on the touch input surface comprises detecting at least a distance from the object sensor to a said object touching the touch input surface, and discarding any touch inputs to the touch input surface comprises discarding any touch inputs to the touch input surface that do not lie the detected distance away from the object sensor.

In an example, obtaining an indication of the location of an object on the touch input surface is performed in response to detecting a touch input on the touch input surface.

In an example, the method comprises discarding all but one of the touch inputs to the touch input surface, and outputting the remaining one touch input.

There may also be provided a computer program for operating an electronic device, the computer program comprising computer-executable code configured so as when executed by a processor to perform operations of: detecting a touch input on a touch input surface of the electronic device; obtaining an indication of the location of an object on the touch input surface when an object is touching the touch input surface; and discarding any touch inputs to the touch input surface that do not correspond to the location of an object touching the touch input surface.

### Brief Description of the Drawings

To assist understanding of the present disclosure and to show how embodiments may be put into effect, reference is made by way of example to the accompanying drawings in which:
Figure 1 shows schematically an example of an electronic device;
Figure 2 shows schematically a touchscreen having water on its surface;
Figures 3a and 3b show schematically examples in which sensors are provided for monitoring portions of the touchscreen surface for objects;
Figures 4a and 4b show schematically examples in which sensors are provided for detecting objects within a given distance of the sensor; and
Figure 5a and 5b show schematically examples in which sensors are provided for determining distances to objects on the touchscreen.

### Detailed Description

Touch input devices allow a user to control a computer or computer device by detecting touch using, for example, capacitive or resistive touch-sensing technology. Such input devices generate control commands in response to detected user input, and output the control commands to a processor for controlling the computer or computing device. The user is thereby able to perform control operations by touching a location on the input device (e.g. to select an item displayed at a corresponding location on a display screen of the computer) and/or by touching and dragging on the surface (e.g. to create a graphic object on the screen, or to move an item on the screen). Some input devices may be able to detect multiple concurrent touch inputs by the user, which may be interpreted by the computer as different control commands from single touch inputs.

Input devices of this kind are commonly integrated into laptop computers (as trackpads, touchpads, etc.). Another example of a known touch input device is a graphics tablet (also known as a drawing tablet, digitizer, digital drawing tablet, or pen tablet) which comprise a surface on which the user can "draw" to create art in a graphic design application. Graphics tablets are commonly provided with a stylus, which is a pointing device the user can hold, e.g. like a pen, in order to accurately and intuitively operate the input device. In such cases, the sensors of the surface are arranged to detect the location of the stylus. Styluses can also be used to operate other types of touch input devices.

Instead of the input device being used to send control commands to an external display screen, the surface itself may be a display screen. The common term for such an arrangement is a "touchscreen". A touchscreen acts as both an input and an output device, as it can both receive touch input from a user and display content to the user. An advantage of a touchscreen is that the user is able to select items displayed on the screen by touching the display location of the item itself.

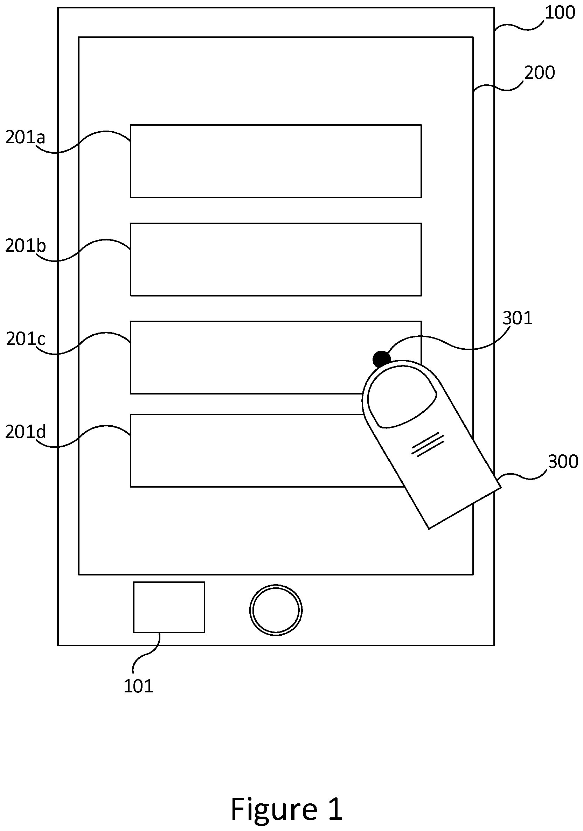

Figure 1 shows schematically an electronic device 100 having a touch input surface 200, in this example in the form of a touchscreen 200, and a processor 101. The electronic device 100 may be, for example, a smartphone or tablet computer or the like. The processor 101 may be an internal processor of the electronic device 100 itself, as shown in Figure 1, or may be an external processor comprised in an external device (e.g. an external display screen).

The touchscreen 100 is capable of displaying visual content and also receiving touch input. The touchscreen 100 is operably coupled to the processor 101. The processor 101 is configured to control the touchscreen 100 to display visual content, and to receive touch input from the touchscreen 100. In this example, four icons 201a-d are displayed on the touchscreen 100 and a user has provided touch input 301 by tapping on the touchscreen 100 with a finger 300. The touch input 301 is located at a position on the touchscreen 100 at which the third icon 201c is displayed. Such an input may be interpreted by the processor 101 as a selection of the third icon 201c. For example, the icons 201a-d may be four options from which the user can choose by touching the desired one of the icons 201a-d.

The touchscreen 100 may be, for example, a capacitive touchscreen. Such touchscreens comprise an insulating surface (e.g. glass) coated with a conductor (e.g. indium tin oxide) and are arranged to detect touch input by measuring changes in capacitance of the surface. Various different methods for determining the location of a touch input are known, such as for example using mutual capacitance and self-capacitance.

Objects other than the user's finger 300 or contaminants, etc., may cause a change in capacitance which are then registered by the touchscreen 200 as a touch input. As these touch inputs are not enacted by the user, they can result in the electronic device 100 functioning in an undesired fashion (e.g. selecting an icon which was not intended by the user). For example, moisture (e.g. water or sweat) or dirt on the screen can cause a touchscreen to register "false" touch inputs, particularly in the case of capacitive touchscreens.

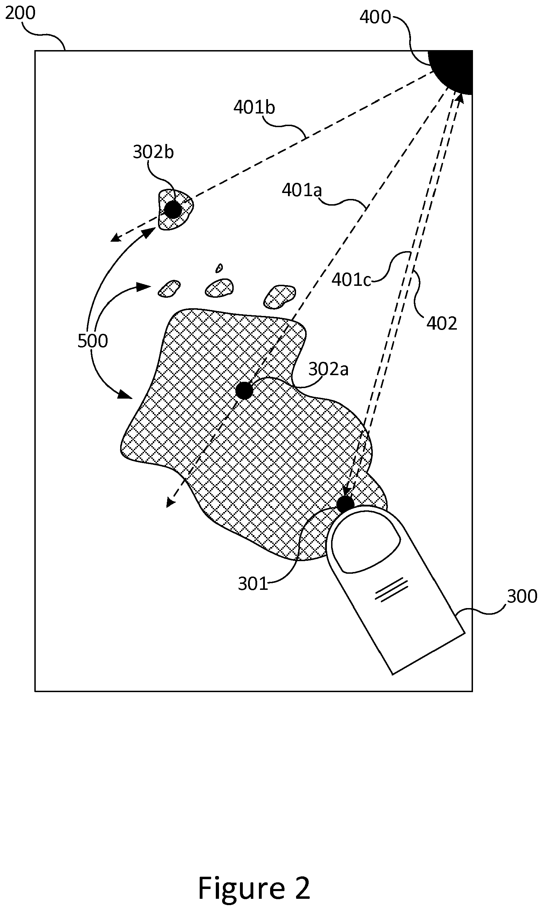

The touchscreen 200 is shown schematically in Figure 2 for the purposes of explaining the touch input functionality only. Hence, the electronic device 100 (and processor 101 thereof) is not shown, and the touchscreen 200 is not shown displaying any visual content. In this example, the user has again provided touch input 301 using a finger 300 in the manner described above. However, there is water 500 on the touchscreen 200 which has caused the touchscreen 200 to register two additional touch inputs 302a-b at different locations on the touchscreen 200 from the location of the intended touch input 301. The additional or "false" inputs 302a-b may result in an unwanted operation by the processor 101, such as selection of a different icon other than the one intended by the user when providing the intended or "actual" touch input 301.

An object sensor 400 is provided for detecting objects touching the surface touchscreen 200. The object sensor 400 is operably coupled to the processor 101 in that the processor 101 is configured to receive data from the sensor 400.

The processor 101 is configured to use the data received from the sensor 400 to identify false inputs 302a-b. That is, the processor 101 is configured to use the object sensor 400 to determine which (if any) of the touch inputs 301, 302a-b are not being caused by an object (such as a user's finger 300 or a stylus). The processor 101 may additionally be configured to determine positively which one or more of the touch inputs 301, 302a-b is caused by an object on the touchscreen 200. In either case, the output of the object sensor 400 is used by the processor 101 to discard or ignore those of the touch inputs 301, 302a-b that are determined not to be caused by an object on the touchscreen 200. A number of examples regarding the construction, arrangement, and operation of the object sensor 400 are discussed in more detail below. In general, the object sensor 400 may be any type of sensor capable of distinguishing between wanted objects (such as the user's finger 300 or stylus) and unwanted objects (such as water, dirt, etc.).

In the example shown in Figure 2, there is a single object sensor 400 located at a corner of the touchscreen 200. Preferably, the object sensor 400 is positioned so as to block as little of the touchscreen 200 as possible (e.g. by positioning the object sensor 400 outside the edge of the touchscreen 200). The user is then able to use the entire surface of the touchscreen 200, and images may be displayed visibly on the entire surface.

The object sensor 400 in Figure 2 is configured to emit signals (e.g. IR light, ultrasound, etc.) across the surface of the touchscreen 200 and to measure the direction from which any reflected signal returns. Three exemplary signals 401a-c, which pass from the sensor 400 towards a respective one of the touch inputs 301, 302a-b, are shown in Figure 2. The first signal 401a is directed towards touch input 302a; the second signal 401b is directed towards touch input 302b; and the third signal 401c is directed towards touch input 301.

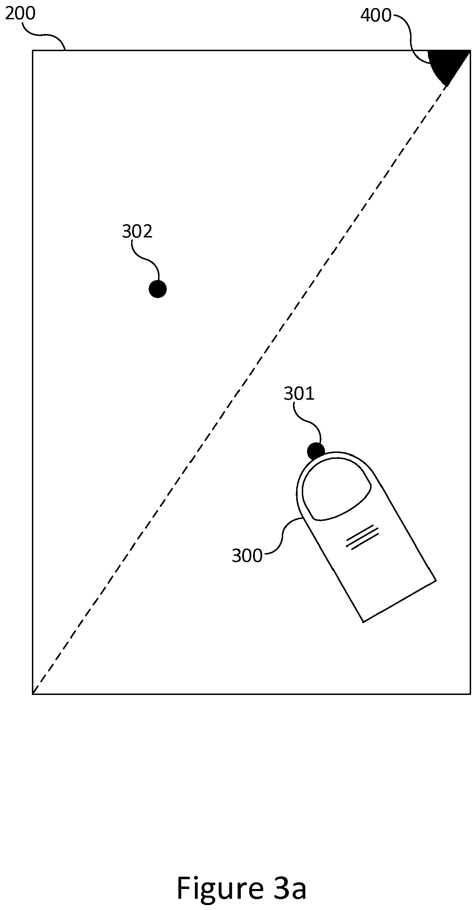

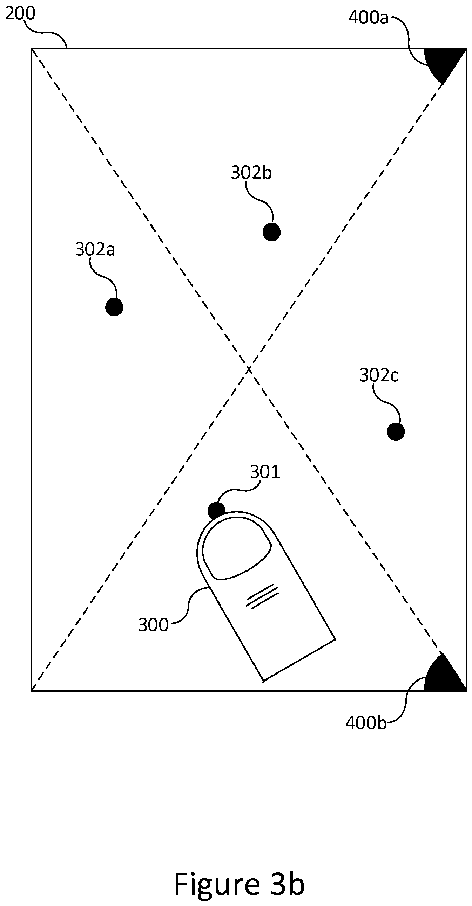

The signals 401a-c pass through the water 500 but reflect off the user's finger 300. Hence, the sensor 400 receives a reflected signal 402 back from the direction of the third signal 401c but no such reflections from the direction of signal first signal 401a or second signal 401b. This can be used to determine that there is an object (the finger 300 in this example) somewhere in the direction of third signal 401c. The sensor 400 itself may make this determination, or the raw sensor data may be transmitted to the processor 101 which then performs this. Either way, the processor 101 then determines, based on this information, which of the touch inputs 301, 302a-b are not caused by an object on the touchscreen 200. For example, the processor 101 may determine which (if any) touch inputs lie in regions of the touchscreen 200 which have been determined, using the sensor 400, to not contain a finger or stylus (or other intentional touch input object). Further examples of this are described below with reference to Figures 3-5.

As these determined inputs (input 302a and input 302b in this example) do not correspond to the location of an object touching the touchscreen 200, they can be discarded. That is, the processor 101 is configured to ignore any inputs which have been determined to not have been caused by an object such as a finger 300 or stylus. This means that these type of touch inputs do not then result in actual control operations (e.g. selecting icons) on the electronic device 100. In other words, inputs which were not caused by the user touching the touchscreen 200 (e.g. using a finger 300 or stylus, etc.) are ignored. This has the advantage of improving the functioning of the electronic device 100, in that the electronic device 100 will only respond to actual touch inputs enacted by the user.

Figure 3a illustrates a simple example in which the sensor 400 is arranged to detect objects on a portion of the touchscreen 200 only. The portion in this example is the upper left diagonal half of the surface of the touchscreen 200, but other portions could be used. The actual touch input 301 is shown being generated by a user's finger 300 in the lower right diagonal portion of the touchscreen 200. A false touch input 302 is shown being generated in the upper left diagonal portion of the touchscreen 200 (e.g. as generated by water 500 on the touchscreen 200, particularly in the upper left diagonal portion of the touchscreen 200 in this example).

The sensor 400 generates an output indicative of whether or not it there is an object present in the portion. The processor 101 is thereby able to discount any touch inputs that are registered in the sensed portion if the sensor 400 indicates that no objects are touching the sensed portion. That is, the processor 101 discounts input 302 in response to determining that the sensor 400 has not sensed an object in the monitored upper left diagonal portion. In this example, only one touch input remains: the actual touch input 301. The processor 101 may be configured to interpret a touch input as a "real" touch input if it is the only one remaining after all the false touch inputs have been discarded.

There may be more than one sensor present. When there are multiple sensors, the sensors may be configured to emit different signals, for example, different wavelengths (frequencies) of light. In another example, one sensor could be a light sensor (e.g. using IR light signals) and another sensor could be an ultrasound sensor. Both of these have the advantage of improving sensor accuracy because it reduces interference between the sensor signals. Alternatively or additionally, the sensors may be configured to activate at different instances in time so as to avoid inter-sensor interference which may otherwise occur.

In the example of Figure 3b, there is a first sensor 400a and a second sensor 400b. The first sensor 400a is arranged and configured in the same manner as the sensor 400 in the example of Figure 3a. The second sensor 400b is configured in a similar manner, but arranged to detect objects in a different region of the touchscreen 200. Specifically, Figure 3b shows the second sensor 400b as arranged to detect objects on the lower left diagonal portion of the surface of the touchscreen 200. With this arrangement, four regions of the touchscreen 200 can be distinguished, as explained below.

The actual touch input 301 generated by a user's finger 300 is in a region of the touchscreen 200 which is monitored by the second sensor 400b and not the first sensor 400a. A first false input 302a is located in a region of the touchscreen 200 that is monitored by both the first sensor 400a and the second sensor 400b. A second false input 302b is located in a region of the touchscreen 200 that is monitored by the first sensor 400a and not the second sensor 400b. A third false input 302c is located in a region of the touchscreen 200 that is monitored by neither of the first sensor 400a and second sensor 400b. Hence, in this example, the second sensor 400b will register an object (the user's finger 300), and the first sensor 400a will not register an object.

The processor 101 receives input from the first sensor 400a and second sensor 400b. The processor 101 determines, from at least the input from the first sensor 400a, that the first 302a and second 302b touch inputs are false touch inputs because they are not associated with an object on the touchscreen 200 (i.e. they are located in a region of the touchscreen 200 known, from the first sensor 400a response, to not contain an object). The processor 101 therefore discards the first 302a and second 302b inputs.

The processor 101 then determines, using the input from the second sensor 400b, that touch input 301 is the "real" touch input. This is possible because touch input 302a has already been discarded, leaving only touch input 301 in the region of the touchscreen 200 known (from input of sensor 400b) to contain an object. The processor 101 then treats touch input 301 as the actual touch input to use for operation of the electronic device 100.

Touch input 302c may or may not be discarded by the processor 101 in this example. The processor 101 does not know whether or not input 302c is caused by an object on the touchscreen 200 (and should therefore be used) because neither sensor 400a,b monitors the area in which input 302c is located. The processor 101 may be configured to ignore all further inputs in response to positively determining a real touch input (as described above).

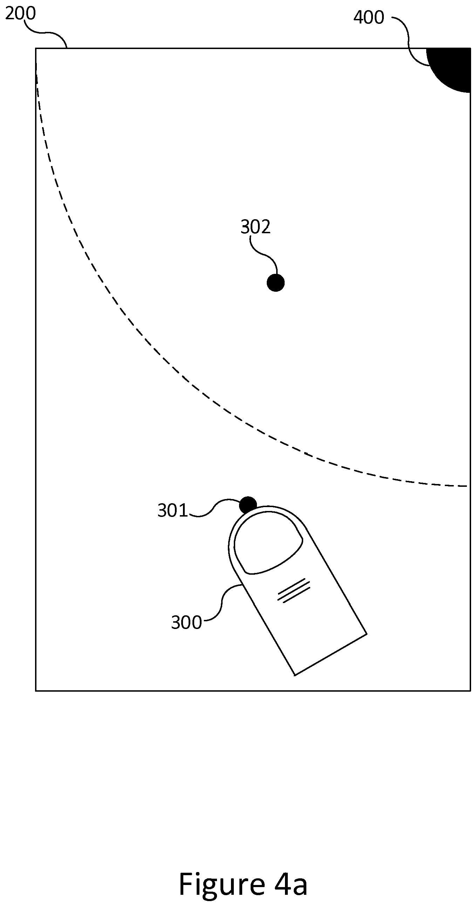

Other arrangements of one or more sensor 400 are possible. Figure 4a illustrates an example in which a single sensor 400 is located at a corner of the (rectangular, in this case) touchscreen 200. The sensor 400 in this example is arranged to detect objects within a predetermined distance of the sensor 400.

The user is touching a finger 300 to the touchscreen 200 which results in actual touch input 301. A false touch input 302 is also generated, e.g. by water on the screen, as described above. The actual touch input 301 is located further from the sensor 400 than the predetermined distance. The false touch input 302 is located closer to the sensor 400 than the predetermined distance. Hence, the sensor 400 does not register an object. The processor 101 therefore discards touch input 302 and may proceed to use touch input 301 as the actual touch input for control of the electronic device 100.

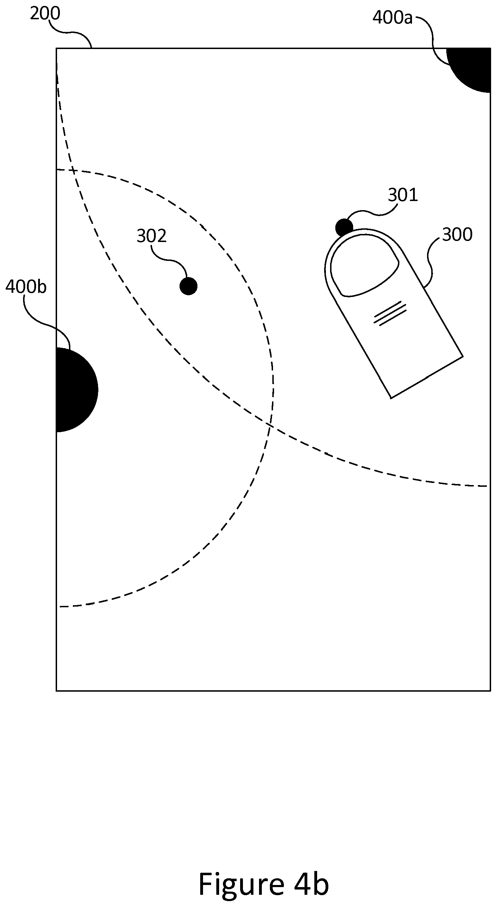

In the example of Figure 4b, there is a first sensor 400a arranged and configured as in Figure 4a, and an additional second sensor 400b. The second sensor 400b is similarly configured to detect objects within a predetermined distance, but is located at a different position on the edge of the touchscreen 200 than the first sensor 400a. The predetermined distance (detection range) of the second sensor 400b may be different from that of the first sensor 400a).

Although the two "potential" touch inputs (real touch input 301 and false input 302) lie within the predetermined distance of the first sensor 400a, the processor 101 is able to use input from the second sensor 400b to tell the inputs apart. That is, the false input 302 lies within the predetermined distance of the second sensor 400b, and the real touch input 301 lies outside the predetermined distance of the second sensor 400b. This means that the second sensor 400b will not register an object. The processor 101 is therefore able to discard touch input 302 as being "false", leaving only touch input 301 which the processor 101 can then determine is the real touch input.

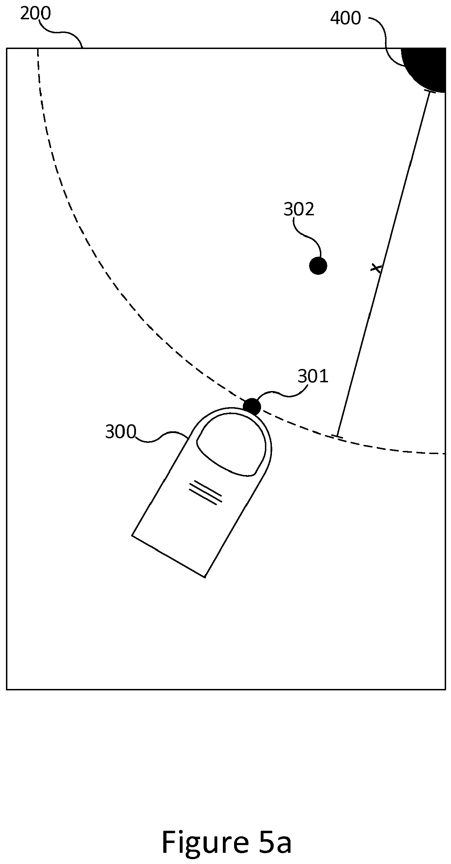

In the examples given above, the sensors 400 have been able to determine whether or not an object is present within a "monitored area" (either a specific portion of the touchscreen 200, or within a predetermined distance of the sensor 400). It is also possible for the sensors 400 to determine (an estimate of) the actual distance to an object such as a finger 300. In such cases, a distance measurement by a sensor 400 limits the possible locations of the object on the touchscreen 200 to a set of points equidistant from the sensor 400 (at the measured distance). An example of this is shown in Figure 5a in which there is a single sensor 400, and the touchscreen 200 is registering two touch inputs 301, 302.

The sensor 400 in this example determines that there is an object (the finger 300) a distance x away from the sensor 400. Note that there may be some error on this value. For example, the sensor 400 may determine that there is an object at a distance x±5%, x±10%, etc. In such cases, the locus of possible object locations (shown by a dotted line at a constant distance x from sensor 400 in Figure 5a) may not be a line, but may be two-dimensional area (e.g. an annulus sector) of possible object locations.

The processor 101 is able to determine that input 302 should be discarded because it is not located distance x from the sensor 400. The processor 101 may then determine that touch input 301 is the real touch input as it is the only potential touch input remaining. Alternatively, the processor 101 may be configured to make a positive determination as to the real touch input. This is possible in this example because there is only one touch input (real touch input 301) located at a location on the touchscreen 200 which is distance x away from sensor 400.

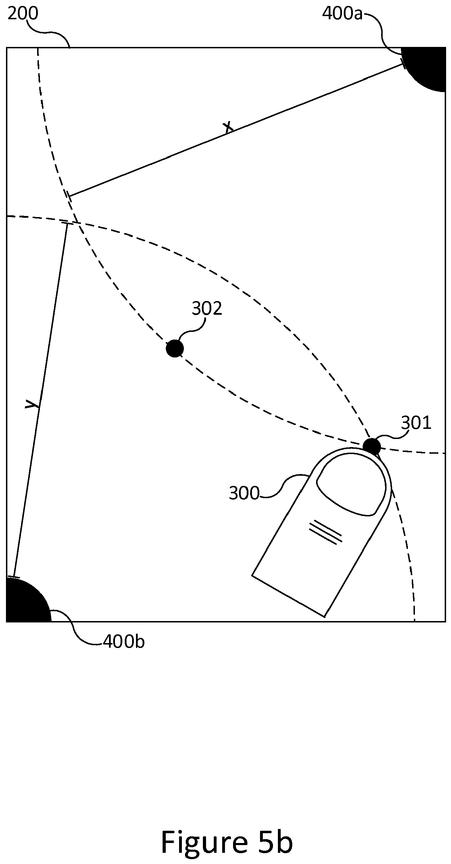

In Figure 5b, there is a first sensor 400a and a second sensor 400b. The first sensor 400a is configured and arranged in the same manner as the sensor 400 of Figure 5a. The second sensor 400b is configured in a corresponding manner to the first sensor 400a, but arranged at the opposite corner of the touchscreen 200. Again, the first sensor 400a determines a distance x to the object (user's finger 300 in this example). The second sensor 400b determines a distance y to the object. Although the real touch input 301 and false touch input 302 are both located distance x away from the first sensor 400a, the processor 101 is able to determine that touch input 301 is the real touch input because it is the only touch input of the two that is located distance y from the second sensor 400b.

Note that the two distance-sensor arrangement shown in Figure 5b is enough to narrow down the location of an object on the touchscreen 200 to at most two points. A third sensor of this type would be enough to unambiguously determine the location of an object.

In the examples given above, the sensors 400 have been of the same type. However, this need not be the case; one or more of the sensors 400 may be different. For example, some sensors may be configured to measure actual distances (as in Figures 5a and 5b) and some other sensors may be configured to monitor an area (and not measure an explicit distance value).

In general, the processor 101 is configured to narrow down the set of "potential" touch inputs in order to minimise the number of touch inputs which affect the functioning of the electronic device in an undesirable way. This may involve discarding all of the touch inputs (if none of them result from a real touch input by an object, e.g. they all result from water on the screen) to avoid the electronic device 100 reacting to any input. In other cases, this may involve determining a single one of the touch inputs which should be treated as a real touch input and therefore used to control the electronic device 100 (e.g. if all but one of the touch inputs are discarded by the processor 101, or if the processor 101 is able to make a positive determination of which touch input is associated with an object on the screen). Multi-touch input is a known method of operating some types of touchscreen in some applications. Therefore, the processor 101 may in some example determine multiple (i.e. two or more) touch inputs to use as real touch inputs

Water 500 (see Figure 2) and other substances on the touchscreen 200 typically result in a large number of touch inputs being registered by the touchscreen 200. Hence, the sensors 400 may be configured to operate (e.g. power on) in response to the touchscreen 200 registering more than a threshold number of simultaneous touch inputs. This has the advantage of saving battery power of the electronic device 100. In other words, the processor 101 may operate in a "normal mode" when there is only a small number (fewer than a threshold amount) of touch inputs to the touchscreen 200, in which the sensors 400 are not powered. The processor 101 may then switch to a "wet mode" in response to identifying that many touch inputs (e.g. equal to or more than the threshold amount) are registered on the touchscreen 200. The threshold number may be small (e.g. one, two, or three). The threshold number of touch inputs which triggers the switching may be set to be one more than the maximum number of touch inputs assigned to a genuine control operation. For example, if the electronic device 100 is configured to recognise double touch inputs as operations (e.g. zooming in or out), but not triple touch inputs, then the threshold can be set at three touch inputs. This means that the processor 101 would switch to "wet mode" in response to three (or more) touch inputs being detected on the touchscreen 200 at once. The processor 101 then powers up the sensors 400 and proceeds to determine which of the three or more inputs (if any) it should interpret as genuine for the purposes of controlling the electronic device 100.

While the above has been described principally with reference to a touchscreen, it is appreciated that the principles described herein may be employed in a non-display touch input device (e.g. a graphics tablet) in order to provide the same functionality.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electronic device comprising:
a touch input surface;
a touch sensor arrangement for detecting a touch input on the touch input surface;
an object sensor for obtaining an indication of the location of an object on the touch input surface when a said object is touching the touch input surface; and
a processor configured to discard any touch inputs to the touch input surface that do not correspond to the location of an object touching the touch input surface.

2. A device according to claim 1, wherein the object sensor is arranged to detect when a said object is touching at least one sub-region of the touch input surface; and the processor is configured to discard any touch inputs to the touch input surface that do not lie in the detected sub-region.

3. A device according to claim 1 or claim 2, wherein the object sensor is arranged to detect at least a distance from the object sensor to a said object touching the touch input surface; and the processor is configured to discard any touch inputs to the touch input surface that do not lie the detected distance away from the object sensor.

4. A device according to any of claims 1 to 3, wherein the object sensor is configured to operate in response to the touch sensor detecting a plurality of simultaneous touch inputs.

5. A device according to any of claims 1 to 4, wherein the object sensor is positioned at a corner of the touch input surface.

6. A device according to any of claims 1 to 5, comprising a first object sensor and a second object sensor located at different positions relative to the touch input surface.

7. A device according to claim 6, arranged such that the first object sensor and the second object sensor are activated at different times.

8. A device according to any of claims 1 to 7, wherein the or each object sensor is a light sensor.

9. A device according to claim 6 or claim 7, wherein the first object sensor comprises a first light sensor arranged to emit and detect light having a first wavelength and the second object sensor comprises a second light sensor arranged to emit and detect light having a second wavelength different from the first wavelength.

10. A device according to any of claims 1 to 9, wherein the touch sensor is a capacitive sensor.

11. A device according to any of claims 1 to 10, wherein the touch input surface is a touchscreen.

12. A method of operating an electronic device, the method comprising:
detecting a touch input on a touch input surface of the electronic device;
obtaining an indication of the location of an object on the touch input surface when an object is touching the touch input surface; and
discarding any touch inputs to the touch input surface that do not correspond to the location of an object touching the touch input surface.

13. A method according to claim 12, wherein obtaining the indication of the location of an object on the touch input surface comprises detecting when an object is touching at least one sub-region of the touch input surface, and wherein discarding any touch inputs to the touch input surface comprises discarding any touch inputs to the touch input surface that do not lie in the detected sub-region.

14. A method according to claim 12 or claim 13, wherein obtaining the indication of the location of an object on the touch input surface comprises detecting at least a distance from the object sensor to a said object touching the touch input surface, and wherein discarding any touch inputs to the touch input surface comprises discarding any touch inputs to the touch input surface that do not lie the detected distance away from the object sensor.

15. A method according to any of claims 11 to 13, wherein obtaining an indication of the location of an object on the touch input surface is performed in response to detecting a touch input on the touch input surface.
